Europäisches Patentamt

European Patent Office

Office européen des brevets

(19)

(11) EP 1 526 675 A2

## (12) EUROPEAN PATENT APPLICATION

(43) Date of publication:
**27.04.2005 Bulletin 2005/17**

(51) Int Cl.$^7$: **H04L 7/033**

(21) Application number: **04256404.7**

(22) Date of filing: **18.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **20.10.2003 JP 2003359051**

(71) Applicant: **Sony Corporation**
**Tokyo 141-0001 (JP)**

(72) Inventors:
• **Kuroda, Keiichi, C/o Sony Corporation**
  **Tokyo (JP)**
• **Koshimizu, Mikio, C/o Sony Corporation**
  **Tokyo (JP)**

(74) Representative: **Mills, Julia et al**
**D Young & Co**
**120 Holborn**
**London EC1N 2DY (GB)**

(54) **Data transmission system and data transmission apparatus**

(57) A data transmission system having a clock shift compensating function is designed for a reduced circuit scale and reduced electric power consumption. A data transmission D flip-flop in a transmitter is supplied with a clock signal for transmitting data from a clock delay. A transmitter has a data reception D flip-flop, a clock supply, a divide-by-n frequency divider for frequency-dividing a clock signal, and a metastability avoider for removing a metastable state from a clock signal received via the clock delay. The transmitter also has a phase comparator for comparing output signals from the metastability avoider and a modulo-m counter, and a clock edge deleter for controlling the number of pulses or edges of the clock signal from the clock supply depending on an output signal from the phase comparator. Pulses of the clock signal from the clock edge deleter are counted by the counter and supplied to the data reception D flip-flop.

FIG. 1

EP 1 526 675 A2

## Description

The present invention relates to a data transmission system and apparatus. Preferred embodiments relate to a technique of reducing a circuit scale and saving electric power in a data transmission system and a data transmission apparatus which have a clock shift compensating function.

For transmitting data on a communication line, it is generally necessary to transmit some timing-related information in order to differentiate individual data that is transmitted chronologically adjacent to each other. One widely used method is based on the fact that transmitted data change with time, and uses a PLL (Phase-Locked Loop) circuit to extract timing information of the data from the data that is received at a reception end. The approach using the PLL circuit requires highly accurate analog circuit components such as VCO, etc., and hence poses problems in that the circuit scale and power consumption tend to be large. In addition, the PLL circuit needs a long startup time before it is locked after being activated. Therefore, the PLL method should desirably be limited to applications which will tolerate the above problems.

Short-distance data transmission applications which find the PLL circuit unsuitable for obtaining timing information employ a system, e.g., a DPA (Digital Phase Aligner), for transmitting timing information via a dedicated line. For details, reference should be made to Japanese Patent Laid-open No. Hei 8-163117, for example. The system generates a plurality of delayed replicas of transmitted data at a reception end by shifting the data in phase, and selects one of the replicas in optimum phase as received data. The system is advantageous in that it does not require an arrangement including a large-scale analog circuit such as a PLL circuit and has a short phase correction time of several bits.

However, the conventional circuit arrangements are liable to give rise to problems if efforts are made to reduce the circuit scale and reduce electric power consumption.

For example, the system that generates a plurality of delayed replicas requires a number of registers and flip-flops for holding delayed replicas and a complex high-speed circuit arrangement for selecting an optimum one of delayed replicas. Consequently, the system tends to have a large hardware size and suffer increased electric power consumption.

Preferred embodiments of the present invention seek to provide a data transmission system and a data transmission apparatus which can suitably be designed for a reduced circuit scale and reduced electric power consumption.

A first aspect of the present invention provides a data transmission system comprising a first transmitter for transmitting data in synchronism with a first clock signal, and a second transmitter for receiving data from the first transmitter in synchronism with an output signal from a counter based on a second clock signal having a frequency higher than the first clock signal, the second transmitter having a clock shift compensator for controlling the number of pulses of the second clock signal depending on the result of comparison in phase between a phase reference signal based on the first clock signal and the output signal from the counter, thereby to correct the phase of the output signal from the counter to keep the output signal from the counter and the phase reference signal in phase with each other.

Therefore, if different transmission clock signals are used to send and receive data, then the phase difference between the clock signals is detected, and the number of pulses of one of the clock signals, i.e., the second clock signal, is controlled to correct the phase thereof for preventing the data from being destroyed or transmitted in error.

The data transmission system according to embodiments of the present invention are capable of performing functions equivalent to or more than those of the conventional data transmission system without the need for any high-speed analog circuits, high-speed circuits, complex control circuits, and large-scale memories, and of increasing the reliability of data transmission. Unlike DPAs, the data transmission system requires no memories and delay lines for processing reception data, and is effective in simplifying the hardware arrangement thereof and saving electric power to be consumed thereby.

The clock shift compensator may include a phase comparator for comparing the phase reference signal and the output signal from the counter in phase, and a clock edge deleter for limiting the number of pulses of the second clock signal depending on an output signal from the phase comparator and delivering the second clock signal with the limited number of pulses to the counter. The clock edge deleter controls a deleted quantity (including zero) for the number of pulses of the second the clock signals to keep the first and second clock signals in phase with each other.

The second transmitter may include a clock supply for outputting the second clock signal, and the first clock signal may be generated based on the second clock signal, so that the clock supply can be shared for the generation of the first and second clock signals. For example, a frequency-divided signal of the second clock signal may be sent to the first transmitter, and the frequency-divided signal may be relayed in the first transmitter so as to be used as the first clock signal and also delivered as the phase reference signal to the second transmitter.

The first clock signal and the second clock signal may have a frequency ratio of 1 : n, or the second transmitter may have a divide-by-n frequency divider for frequency-dividing the second clock signal by n. The counter may include a modulo-m counter where m is less than n. Depending on the result of phase comparison, i.e., whether the divided-by-n clock is in phase with, lags behind, or leads the modulo-m counter output signal, as detected by the phase comparator, the number (including zero) of clock pulses or edges to be deleted may be set to an appropriate value, and the speed of phase correction for a clock shift of the clock signals can be adjusted.

The second transmitter may have a transmission unit for transmitting data in synchronism with the output signal from the counter, and the first transmitter may have a reception unit for receiving data transmitted from the first transmitter in synchronism with the first clock signal. With this arrangement, it is easy to realize bidirectional communications between the first transmitter and the second transmitter, and essential circuits can be shared therebetween. Specifically, the clock shift compensator can be shared by the first and second transmitters, but no separate clock shift compensators need to be provided in the respective first and second transmitters, for the transmission of data from the first transmitter to the second transmitter and the transmission of data from the second transmitter to the first transmitter.

If the second transmitter requires reception data to be converted into serial data, then second transmitter may have a converter for converting parallel data into serial data and a plurality of holders for temporarily holding reception data, the arrangement being such that the reception data is selectively supplied to the holders and an output signal from the holder other than the holder which is supplied with the reception data is supplied to the converter. The data transmission system can perform such data conversion through relatively simple circuit alterations.

The first and second transmitters may have respective clock supplies for supplying the first and second clock signals. In this case, the clock shift compensator corrects the phase of the output signal from the counter by a corrective quantity based on one phase comparison process, which is equal to or greater than an average slip between the first clock signal and the second clock signal. Therefore, if the first and second transmitters use respective clock signals from different clock sources, then the transmission data is prevented from being destroyed due to a slip between the clock signals.

A second aspect of the present invention provides a data transmission apparatus according to claim 10.

The invention will now be described by way of example with reference to the accompanying drawings, throughout which like parts are referred to by like references, and in which:

FIG. 1 is a block diagram of a data transmission system according to an embodiment of the present invention;
FIG. 2 is a diagram illustrative of the phase relationship of outputs from a modulo-m counter and a metastability avoider and the removal of clock edges;
FIG. 3 is a timing chart of a phase correcting process, showing signals in an in-phase state;
FIG. 4 is a timing chart of a phase correcting process which corrects a signal from a lagging state into an in-phase state;
FIG. 5 is a timing chart of a phase correcting process which corrects a signal from a leading state into an in-phase state;
FIG. 6 is a block diagram of a data transmission system for bidirectional communications;
FIG. 7 is a block diagram of a data transmission system for converting parallel data into serial data;
FIG. 8 is a block diagram of a data transmission system for adjusting the duty ratio of a clock signal at a reception side; and
FIG. 9 is a block diagram of a data transmission system including transmitters each having a clock supply.

Embodiments of the present invention provide a clock shift compensating function without involving circuit complexities and circuit scale increases and a circuit arrangement suitable for a reduction in electric power consumption in a data transmission system and a data transmission apparatus for use in the data transmission system which perform unidirectional or bidirectional data communications between a first transmitter and a second transmitter.

The first transmitter and the second transmitter may be used in the following applications:

(1) Data is transmitted between a plurality of transmitters are disposed in one circuit or apparatus. For example, data is transmitted between a circuit section and another circuit section in an LSI (Large-Scale Integration) circuit for use as a processor, a system chip, etc.
(2) Data is transmitted between different circuits or apparatus of one type or different types. For example, data is transmitted from one transmission apparatus to another transmission apparatus.
(3) Data is transmitted between different circuits or apparatus. For example, data is transmitted from an apparatus to another apparatus in a system where a plurality of apparatus having different purposes are interconnected by a communication path.

The first and second transmitters may be components of a circuit or an apparatus, or may be independent apparatus (data transmission apparatus) or devices. Since the present invention has no bearing on forms of transmissions, embodiments of the present invention are applicable to wired or radio communications.

For transmitting data using a clock signal, the data and the clock signal may be separated and transmitted through different communication paths, respectively, or the data and the clock signal may be mixed with each other and transmitted through one communication path, and then separated and processed in a circuit or an apparatus which receives them. Embodiments of the present invention may be applied to either one of these transmission schemes.

Embodiments of the present invention are based on the premise that a second clock signal used by the second transmitter has a frequency higher than a first clock signal used by the first transmitter. These clock signals may be generated as follows:

(I) The first and second clock signals are generated by a clock supply which is included in one of the first and second transmitters.
(II) The first and second clock signals are generated by respective clock supplies which are included respectively in the first and second transmitters, and have a frequency ratio set to a certain value.

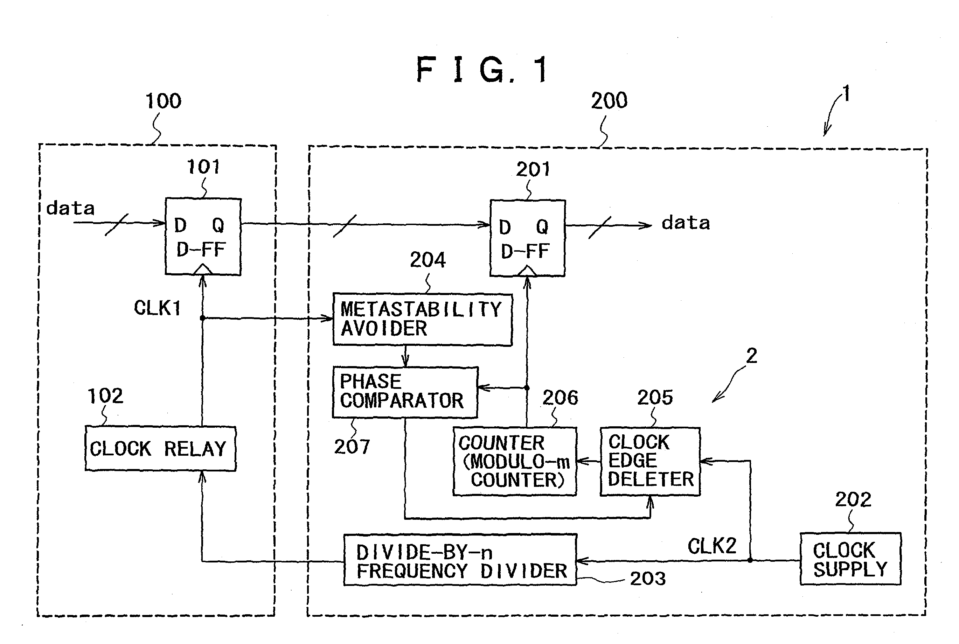

FIG. 1 is a block form showing a data transmission system 1 according to an embodiment of the present invention. The data transmission system 1 illustrating (I) described above transmits data and a clock signal through different paths between a first transmitter 100 and a second transmitter 200.

In the data transmission system 1, data is transmitted from the first transmitter 100 to the second transmitter 200.

The first transmitter 100 transmits data in synchronism with a first clock signal (hereinafter referred to as "CLK1"). If a holder (or a latch) 101 for holding transmission data in synchronism with CLK1 includes a D flip-flop or a D flip-flop group, for example, then the transmission data is input to a D terminal of the holder 101, which holds the transmission data in synchronism with CLK1 that is supplied to a clock signal input terminal of the holder 101. The holder 101 transmits output data from a Q terminal thereof to second transmitter 200.

The first transmitter 100 has a clock relay 102 which supplies CLK1 to the holder 101.

The second transmitter 200 receives the data from the first transmitter 100 according to an output signal from a counter 206 based on a second clock signal (hereinafter referred to as "CLK2"). If a holder 201 for holding reception data in synchronism with the output signal from the counter 206 includes a D flip-flop or a D flip-flop group, for example, then the reception data is input to a D terminal of the holder 201, which holds the reception data in synchronism with the output signal from the counter 206 that is supplied to a clock signal input terminal of the holder 201. The holder 201 transmits output data from a Q terminal thereof to a data processor (not shown) in the second transmitter 200.

The second transmitter 200 also has a clock supply 202 for supplying CLK2 to a divide-by-n frequency divider 203 and a clock edge deleter 205 (to be described later).

The divide-by-n frequency divider 203 frequency-divides CLK2 into a clock signal that is sent to the first transmitter 100. In the first transmitter 100, the clock signal is supplied via the clock relay 102 as CLK1. That is, the frequency-divided clock signal generated from CLK2 is transmitted to the first transmitter 100 and relayed as CLK1 to the holder 101. CLK1 is also delivered as a phase reference signal from the first transmitter 100 to the second transmitter 200. The clock relay 102 has circuit components, such as signal interconnects and a circuit section such as a buffer, etc., for relaying the clock signal from the second transmitter 200 to a circuit section of the first transmitter 100, such as the D flip-flop, etc., and gives an amount of delay to the clock signal.

The second transmitter 200 has a clock shift compensator 2 for correcting the phase of the output signal from the counter 206 by controlling the number of pulses of CLK2 depending on the result of phase comparison between the phase reference signal (reference clock) based on CLK1 and the output signal from the counter 206, and keeping the output signal from the counter 206 and the phase reference signal in phase with each other, thereby compensating for a clock shift.

The clock shift compensator 2 includes, for example, a metastability avoider 204, a phase comparator 207, and a clock edge deleter 205. The counter 206 includes a modulo-m counter.

CLK1 relayed by the clock relay 102 is transmitted from the first transmitter 100 to the second transmitter 200. The metastability avoider 204 serves to remove a metastable state (quasi-stable state) of CLK1. Specifically, the metastability avoider 204 has a circuit arrangement, e.g., a cascaded array of D flop-flops, for avoiding an intermediate state between H and L levels in order to avoid a metastable state which tend to occur when different clocks signals are used. The metastability avoider 204 sends its output signal to the phase comparator 207.

The phase comparator 207 is supplied with the output signal from the counter 206, and compares the output signal from the counter 206 with the phase reference signal that is sent via the metastability avoider 204, i.e., detects a phase difference therebetween. The phase comparator 207 sends a signal indicative of the phase relationship between those signals, i.e., a leading state, an in-phase state, or a lagging state, to the clock edge deleter 205.

The clock edge deleter 205 serves to limit the number of pulses of CLK2 depending on the output signal from the phase comparator 207, and send the limited number of pulses of CLK2 to the counter 206. The clock edge deleter 205, whose detailed operation will be described later, determines a deleted quantity (including zero) for the number of pulses of CLK2 based on the output signal from the phase comparator 207. Specifically, the clock edge deleter 205 determines whether CLK2 with a reduced (decimated) number of pulses of CLK2 with an unreduced number of pulses of CLK2 is to be sent to the counter 206. The clock edge deleter 205 is unable to increase the number of pulses of CLK2.

CLK1 and CLK2 have a certain frequency relationship. For example, if the frequency of CLK1 is represented by "f1" and the frequency of CLK2 by "f2" and the ratio of these frequencies is represented by "f1 : f2 = 1 : n", then the counter 206 includes a modulo-m counter where m is less than n. This is to allow the phase of a clock signal to be corrected also in a leading direction in the phase relationship between clock signals. In response to the signal from the clock edge deleter 205, the modulo-m counter 206 performs a modulo-m counting process (m < n) and sends its output signal to the phase comparator 207 and the holder 201.

Operation of the data transmission system 1 will be described below.

Transmission data is transmitted from the Q output terminal of the D flop-flop as the holder 101 to the D flop-flop as the holder 201 in timed relation to CLK1 from the clock relay 102. The clock relay 102 is supplied with the output signal from the divide-by-n frequency divider 203, i.e., the frequency-divided clock signal generated from CLK2 and having a frequency of f2/n.

The holder 201 receives the data from the D flop-flop as the holder 101 in timed relation to the output signal from the counter 206, i.e., the modulo-m counter. Concurrently, the metastability avoider 204 removes a metastable state from the clock signal that determines the timing of the data transmission, i.e., CLK1 from the clock relay 201, and then supplies the clock signal as one input signal to the phase comparator 207. The output signal from the counter 206 is supplied as the input signal to the phase comparator 207. The phase comparator 207 now compares the phase of the timing for data transmission and the phase of the timing for data reception. The phase comparator 207 sends its output signal, which represents the result of phase comparison, to the clock edge deleter 205, which controls the number of pulses (edges) of CLK2.

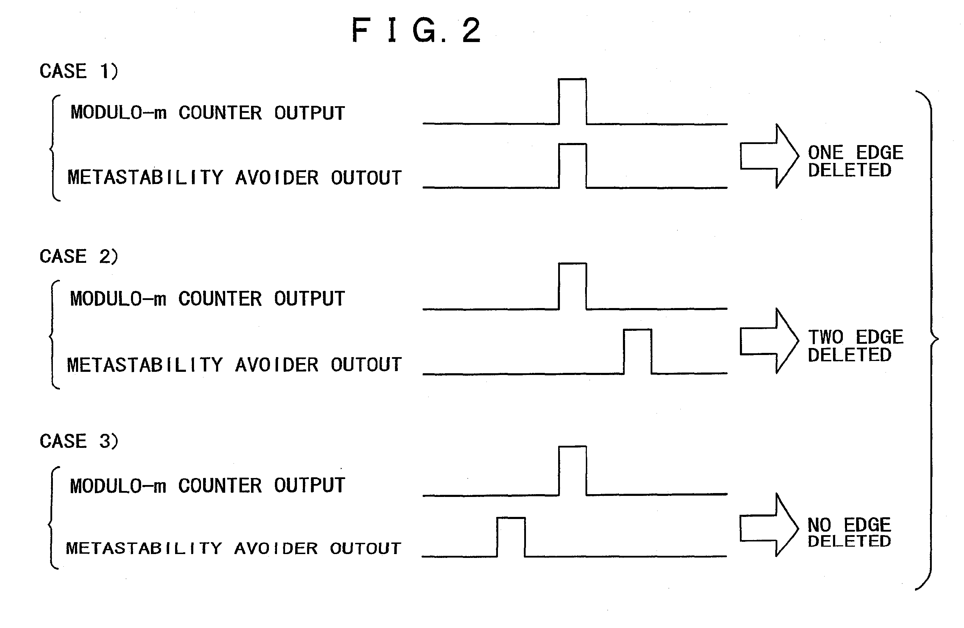

FIG. 2 schematically shows the phase relationship between the output signals from the modulo-m counter 206 and the metastability deleter 204 and the manner in which the metastability deleter 205 is controlled, in the case where m, n are determined to satisfy "m = n - 1".

With the difference between m, n being selected to be 1, if the clock edge deleter 205 deletes one edge from CLK2, then the output signal from the modulo-m counter 206 and the output signal from the metastability deleter 204 have the same frequency, i.e., are in phase with each other. This state corresponds to "Case 1" in FIG. 2.

"Case 2" and "Case 3" in FIG. 2 represent the respective states in which the output signals from the modulo-m counter 206 and the metastability deleter 204 are one pulse out of phase with each other, as compared with "Case 1".

Specifically, if the output signal from the metastability deleter 204 lags behind the output signal from the modulo-m counter 206 in "Case 2", then two pulses or edges are deleted from CLK2, bringing the output signals into phase with each other.

Conversely, if the output signal from the metastability deleter 204 leads the output signal from the modulo-m counter 206 in "Case 3", then no pulses or edges are deleted from CLK2, bringing the output signals into phase with each other.

It is assumed that the clock signal of the modulo-m counter 206 is output at a time determined in view of circuit design parameters (such as a setup time, a hold time, etc.) to allow the D flip-flop as the holder 201 to receive properly the Q output signal of the D flip-flop as the holder 101.

By thus establishing the relationship "m < n", the output signal from the modulo-m counter 206 and the output signal from the metastability deleter 204 are kept in phase with each other by removing "n - m" clock pulses or edges from CLK2. By not removing clock pulses or edges, it is possible to advance the output signal from the modulo-m counter 206 which lags behind the output signal from the metastability deleter 204 until finally the output signal from the modulo-m counter 206 is brought into phase with the output signal from the metastability deleter 204. For delaying the output signal from the modulo-m counter 206 with respect to the output signal from the metastability deleter 204, a number of clock pulses or edges which is greater than "n - m" may be deleted until finally the output signal from the metastability deleter 204 is brought into phase with the lagging output signal from the modulo-m counter 206. In this manner, it is possible to correct the phase of the output signals in both the lagging and leading directions. The output signals of the metastability deleter 204 and the modulo-m counter 206 can be brought into phase with each other by correcting the phase once or a plurality of times.

While the phase correction for "n - m = 1" has been described above for illustrative purposes, the above principles can be generalized with respect to phase correction for "n - m = k". Specifically, by deleting a number of pulses or edges which is smaller than k or not deleting a number of pulses or edges, with respect to the phase relationship achieved by removing k pulses or edges from CLK2, the output signal from the modulo-m counter 206 can be advanced relatively to the output signal from the metastability deleter 204. In the case of "n = m", the output signal from the modulo-m counter 206 can be delayed, but not advanced. By deleting a number of pulses or edges which is greater than k, the output signal from the modulo-m counter 206 can be delayed relatively to the output signal from the metastability deleter 204.

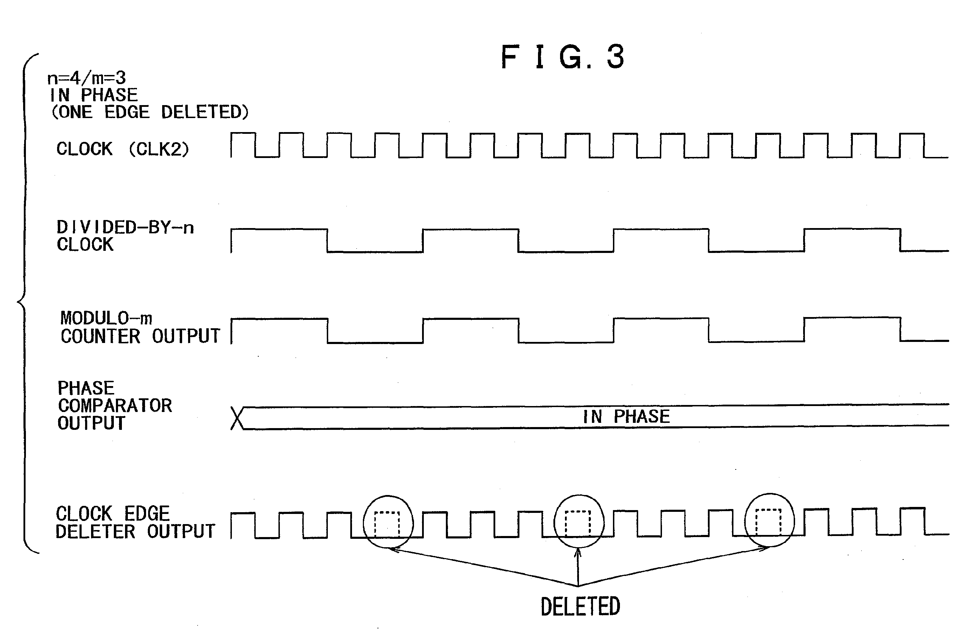

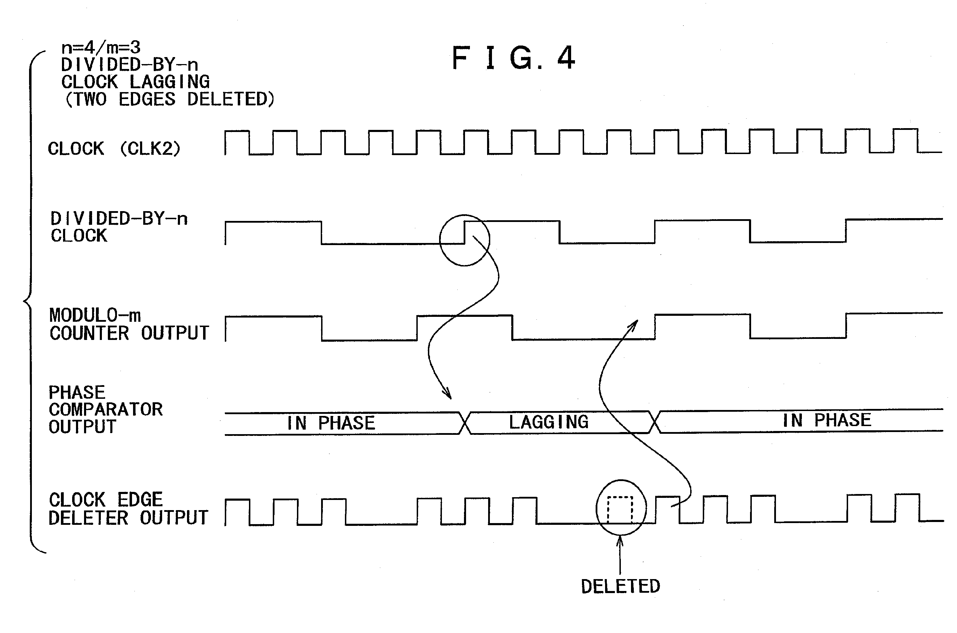

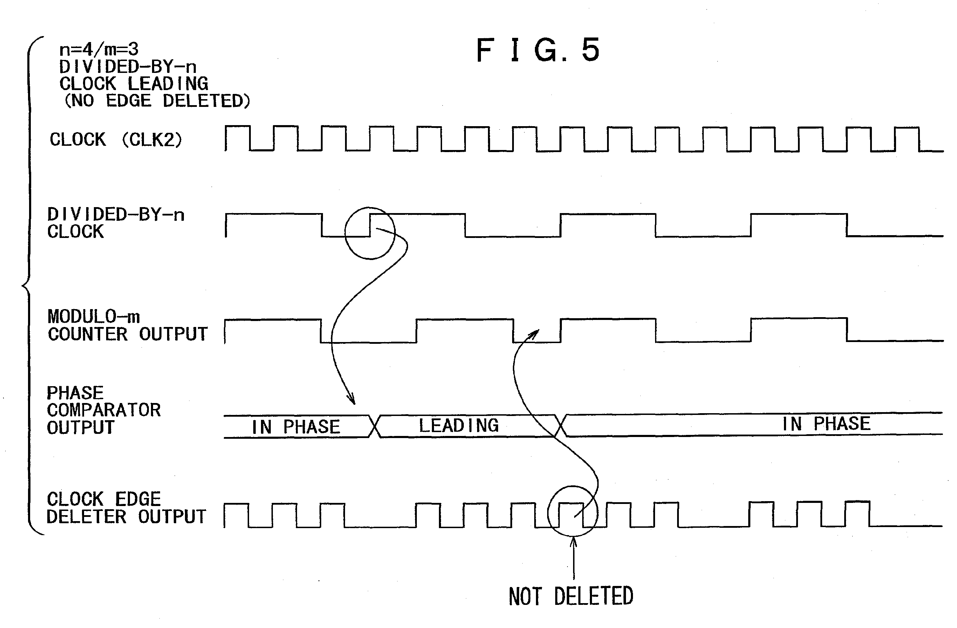

FIGS. 3 through 5 show timing charts showing phase correcting processes for "n = 4, m = 3". In FIG. 3, the divided-by-n clock and the modulo-m counter output signal are in phase with each other. In FIG. 4, the divided-by-n clock lags behind the modulo-m counter output signal. In FIG. 5, the divided-by-n clock leads the modulo-m counter output signal. Each of FIGS. 3 through 5 show, successively from above, the clock (CLK2), the divided-by-n clock (the clock signal to be compared in phase with the output signal from the modulo-m counter 206, i.e., the output signal from the metastability avoider 204), the output signal from the counter 206 (modulo-m counter), the output signal from the phase comparator 207, and the output signal from the clock edge deleter 205.

In FIG. 3, the divided-by-n clock and the modulo-m counter output signal have the same timing as each other, and the phase comparator 207 determines that they are in phase with each other. The clock edge deleter 205 deletes one pulse or edge, producing a clock signal waveform where one clock pulse (shown in broken lines) is removed as indicated by the circles, and the resultant clock pulses are counted by the modulo-m counter 206. That is, one out of every four clock pulses is deleted, keeping the divided-by-n clock and the modulo-m counter output signal in phase with each other.

In FIG. 4, the divided-by-n clock and the modulo-m counter output signal which have been in phase with each other are shifted out of phase with each other, such that the divided-by-n clock lags behind the modulo-m counter output signal. Therefore, the phase delay is corrected to bring the divided-by-n clock and the modulo-m counter output signal back into phase with each other.

Specifically, it is necessary to delay the modulo-m counter output signal with respect to the divided-by-n clock. The phase comparator 207 decides that the divided-by-n clock lags behind the modulo-m counter output signal. The clock edge deleter 205 deletes two edges, so that one more clock pulses or edges (shown in broken lines) is removed as indicated by the circle, producing a clock signal waveform where a total of two pulses are deleted. The resultant clock pulses are counted by the modulo-m counter 206. As a result, the modulo-m counter output signal is delayed, bringing the divided-by-n clock and the modulo-m counter output signal back into phase with each other.

In FIG. 5, the divided-by-n clock and the modulo-m counter output signal which have been in phase with each other are shifted out of phase with each other, such that the divided-by-n clock leads the modulo-m counter output signal. Therefore, the phase advance is corrected to bring the divided-by-n clock and the modulo-m counter output signal back into phase with each other.

Specifically, it is necessary to advance the modulo-m counter output signal with respect to the divided-by-n clock. The phase comparator 207 decides that the divided-by-n clock leads the modulo-m counter output signal. The clock edge deleter 205 deletes no edge, producing a clock signal waveform (see the circle) which is the same as CLK2. The resultant clock pulses are counted by the modulo-m counter 206. As a result, the modulo-m counter output signal is advanced, bringing the divided-by-n clock and the modulo-m counter output signal back into phase with each other.

In this manner, depending on whether the divided-by-n clock is in phase with, lags behind, or leads the modulo-m counter output signal, as detected by the phase comparator 207, the number (including zero) of clock pulses or edges to be deleted is controlled to correct any clock shift for thereby keeping the divided-by-n clock and the modulo-m counter output signal back in phase with each other.

The clock edge deleter 205 is arranged to generate a mask signal for clock pulses of CLK2 depending on the result of phase comparison from the phase comparator 207, thereby to delete clock pulses or edges at a predetermined time. For example, the clock edge deleter 205 may have an AND gate for ANDing CLK2 and the mask signal, CLK2 being supplied to one input terminal of the AND gate and the mask signal to the other input terminal of the AND gate. The clock edge deleter 205 deletes a clock pulse of CLK2 during a period in which the mask signal is of an L level, and does not delete a clock pulse of CLK2, but passes CLK2, during a period in which the mask signal is of a H level.

The phase correction for "m = n - 1" has been described above. However, depending on how the clock signals are shifted with respect to each other, various fixed settings such as "m = n - 2", "m = n - 3", or the like may be employed. Alternatively, the relationship between m and n may be adaptively or dynamically changed depending on how the clock signals are shifted with respect to each other or other situations. For example, it is possible to set a value less than k or equal to or greater than k where "k = n - m" for phase correction. In these cases, the range of clock edge deletion (the upper limit of the number of edges to be deleted) may be increased for increasing the speed of phase correction for a clock shift.

A data transmission system for bidirectional communications according to an embodiment of the present invention will be described below.

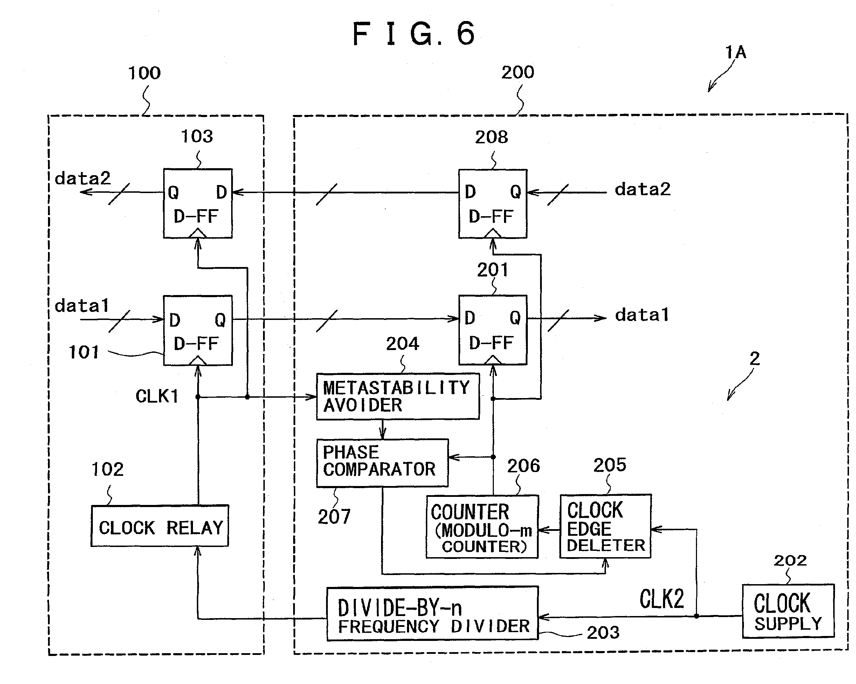

FIG. 6 shows a data transmission system 1A for bidirectional communications, which differs from the data transmission system 1 shown in FIG. 1 as follows:

The second transmitter 200 has a transmission unit 208 for sending data in synchronism with the output signal from the counter 206, and the first transmitter 100 has a reception unit 103 for receiving data sent from the transmission unit 208 of the second transmitter 200 in synchronism with CLK1.

Those parts of the data transmission system 1A which are functionally identical to those of the data transmission system 1 are denoted by identical reference characters. This also holds true for other data transmission systems 1B, 1C, 1D to be described later.

Data is transmitted from the first transmitter 100 to the second transmitter 200 in the same manner as described above with respect to the data transmission system 1 (see "data1"). Concurrent with this data transmission, data is also transmitted from the second transmitter 200 to the first transmitter 100.

Transmission data (see "data2") is input to the D terminal of a D flip-flop or a D flip-flop group as the transmission unit 208, which outputs data from its Q terminal in synchronism with the output signal from the modulo-m counter 206 which is supplied to a clock signal input terminal of the transmission unit 208.

Reception data that is input to the D terminal of a D flip-flop or a D flip-flop group as the reception unit 103 is read into the reception unit 103 in synchronism with CLK1 supplied to a clock signal input terminal thereof. The reception unit 103 outputs data from its Q terminal to a data processor (not shown).

It is assumed that the clock signal of the modulo-m counter 206 is output at a time determined in view of circuit design parameters (such as a setup time, a hold time, etc.) to allow the data reception D flip-flop as the holder 201 to receive properly the output signal of the data transmission D flip-flop as the holder 101, and at the same time to allow the data reception D flip-flop in the first transmitter 100 to receive properly the output signal of the data transmission D flip-flop in the second transmitter 200. It is also assumed that the phase difference between the divided-by-n clock and the modulo-m counter output signal is corrected in the same manner as with the data transmission system 1 shown in FIG. 1.

Since CLK1 and the output signal from the counter 206 are kept in phase with each other by the clock shift compensator 2 as described above. Therefore, these signals can directly be used to perform data transmission from the second transmitter 200 to the first transmitter 100, i.e., the clock shift compensator 2 can be shared by the data transmission from the first transmitter 100 to the second transmitter 200 and the data transmission from the second transmitter 200 to the first transmitter 100.

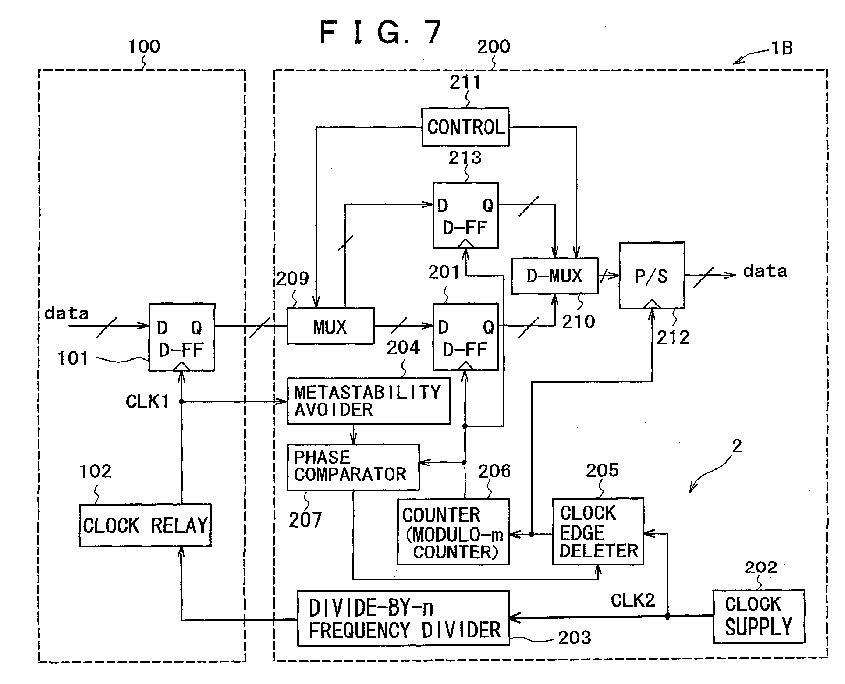

A data transmission system for converting parallel data into serial data in the second transmitter according to an embodiment of the present invention will be described below with reference to FIG. 7.

FIG. 7 shows a data transmission system 1B for converting parallel data into serial data, which differs from the data transmission system 1 shown in FIG. 1 as follows:

The second transmitter 200 has a converter 212 for converting parallel data into serial data (see "P/ S" where P represents "parallel" and S "serial"), and a plurality of holders (or latches) 201, 213 for temporarily holding reception data. The second transmitter 200 also has a first switcher 209 for switching reception data and supplying the reception data to the holders 201, 213, and a second switcher 210 for switching output signals from the holders 201, 213 and supplying them to the converter 212.

In this embodiment, the holders 201, 213 include D flip-flops, respectively, which have respective clock signal input terminals that are supplied with the output signal from the modulo-m counter 206.

The first switcher 209 includes a multiplexer (MUX) and is connected as a stage preceding the holders 201, 213 for connecting one input to any one of plural outputs. The first switcher 209 serves to receive data sent from the first transmitter 100, and send the received data to either the holder 201 or the holder 213 according to a command from a controller (switching controller) 211.

The second switcher 210 includes a demultiplexer (D-MUX) and is connected as a stage following the holders 201, 213 for connecting plural inputs to one output. The second switcher 210 serves to receive data output from the holder 201 or 213 according to a command from the controller 211, and output the received data to the converter 212.

The controller 211 gives commands to the switchers 209, 210 at predetermined times to control switching operation of the switchers 209, 210. The controller 211 has a unit (a flag unit) for sending control signals depending on a flag to the switchers 209, 210.

Data output from the data transmission D flip-flop in the first transmitter 100 is sorted by the first switcher 209 under the command from the controller 211 and selectively read into the D flip-flop as the holder 201 or the holder 213.

Similarly, the switcher 210 controlled by the controller 211 selects the data of the holder which has not read the data from the holder 101, and outputs the selected data to the converter 212. For example, if the flag is set, then when the data selected by the switcher 209 is sent to the D flop-flop as the holder 201, the switcher 210 selects the data output from the D flop-flop as the holder 213 and sends the selected data to the converter 212. If the flag is cleared, then when the data selected by the switcher 209 is sent to the D flop-flop as the holder 213, the switcher 210 selects the data output from the D flop-flop as the holder 201 and sends the selected data to the converter 212.

In this manner, depending on the command supplied from the controller 211 to the switchers 209, 210, the output signal from the holder other than the holder which is supplied with the reception data is supplied to the converter 212. According to the present embodiment, the data is thus complementarily input to and output from the holders 201, 213, i.e., when the data is input to one of the holders 201, 213, the data output from the other holder is selected.

The converter 212 is supplied with the data from the second switcher 210, and outputs data (converted data) in synchronism with the output signal from the clock edge deleter 205 that is supplied to the clock signal input terminal of the converter 212. Specifically, the converter 212 converts parallel data output from the holder 201 or 213 by the second switcher 210 into serial data according to the output signal (clock signal) from the clock edge deleter 205, and outputs the serial data to a non-illustrated data processor.

Concurrent with the above operation, the phase difference between the divided-by-n clock and the modulo-m counter output signal is corrected in the same manner as described above.

With the data transmission system 1B, the clock signal used in the holder 101 on the transmission side and the clock signal used in the holders 201, 213 on the reception side are synchronized with each other, and the switchers 209, 210 under the control of the controller 211 control data input to and output from the holders 201, 213 for converting parallel data into serial data. Such data conversion can be performed without the need for a substantial increase in the circuit scale. For example, as a clock signal for use in parallel-to-serial data conversion is required to have a high frequency, the clock supply provided for the converter 212 can also be used as the clock supply for the clock shift compensator 2. The data transmission system 1B can thus easily be incorporated in parallel-to-serial data conversion applications.

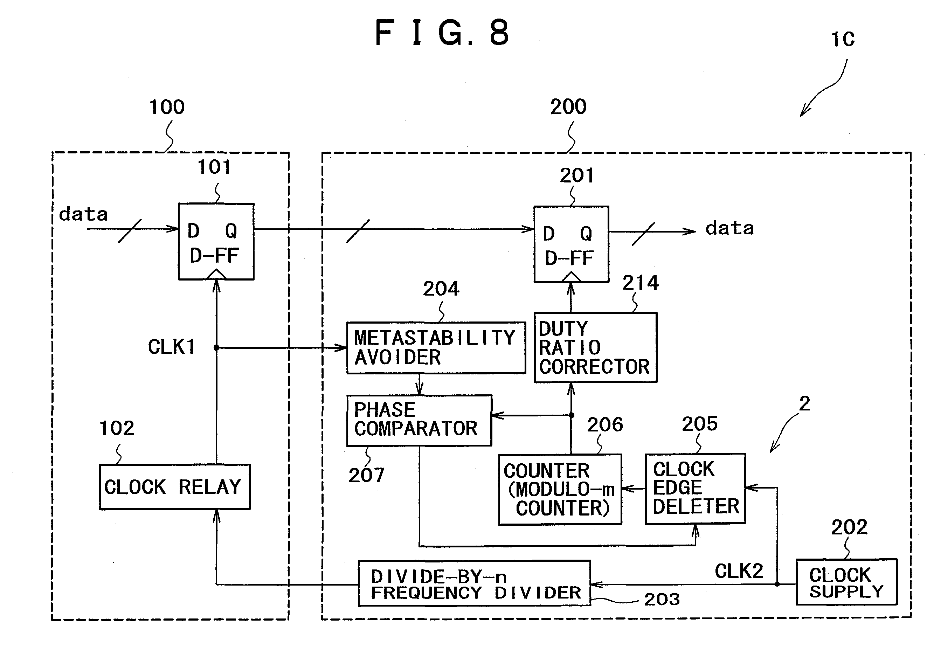

A data transmission system 1C for adjusting the duty ratio of the clock signal on the reception side (the output signal from the counter 206) will be described below with reference to FIG. 8.

The data transmission system 1C differs from the data transmission system 1 shown in FIG. 1 in that a duty ratio adjuster is connected between the counter 206 and the holder 201 for correcting the duty ratio of the output signal from the modulo-m counter 206 and then supplying the corrected duty ratio to the D flip-flop as the holder 201.

If there is a strict requirement to set the duty ratio of the clock signal on the reception side to a prescribed value (50% or the like), then it is preferable to provide a duty ratio corrector 214 provided for correcting the duty ratio of the output signal from the counter 206, and to hold the data on the reception side in synchronism with the output signal from the duty ratio corrector 214. Specifically, the duty ratio corrector 214 is connected as a stage following the counter 206, and the corrected output signal from the duty ratio corrector 214, i.e., the signal having the prescribed duty ratio, is supplied to the clock signal input terminal of the D flip-flop as the holder 201. This arrangement makes it possible to satisfy the above requirement. The output signal from the modulo-m counter 206 is output at a time determined in view of circuit design parameters to allow the D flip-flop as the holder 201 to receive properly the output signal of the D flip-flop as the holder 101 on the transmission side. It is assumed that the phase difference between the divided-by-n clock and the modulo-m counter output signal is corrected in the same manner as described above.

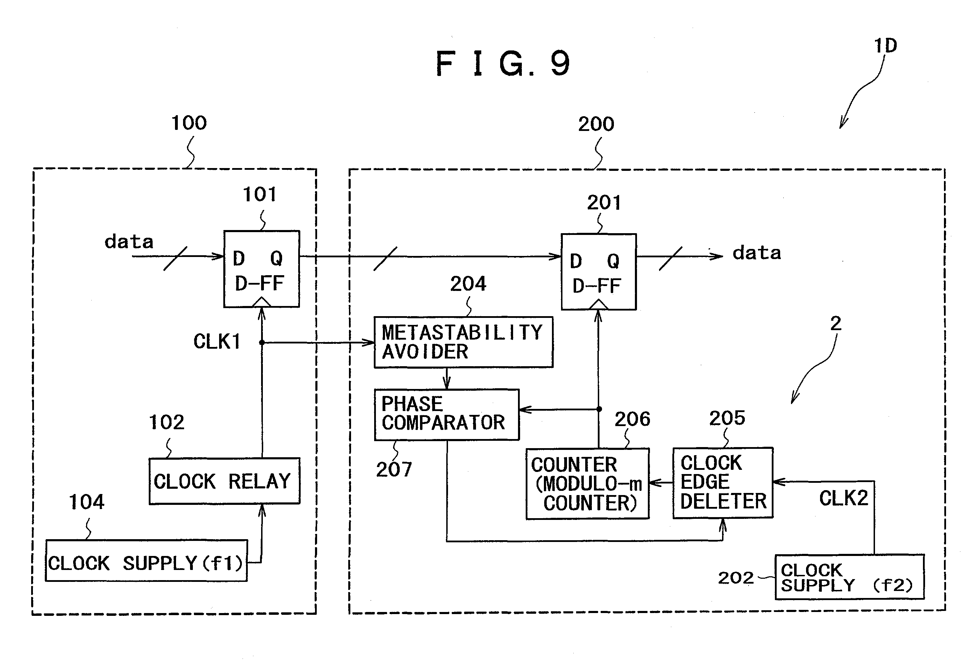

In each of the above embodiments, data is transmitted and received between the transmission side and the reception side using the common clock supply (I). Now, a data transmission system in which the transmitters have respective independent clock supplies will be described (II) below with reference to FIG. 9.

FIG. 9 shows a data transmission system 1D in which the first transmitter 100 has a clock supply 104 and the second transmitter 200 has a clock supply 202. The data transmission system 1D differs from the data transmission system 1 shown in FIG. 1 in that the clock supply 104 in the first transmitter 100 supplies CLK1 via the clock relay 102 to the holder 101, and the phase reference signal based on CLK1 is input via the metastability avoider 204 in the second transmitter 200 to the phase comparator 207. In this embodiment, therefore, the second transmitter 200 requires no divide-by-n frequency divider 203, and the clock supply 202 supplies CLK2 to the clock edge deleter 205.

The frequency (clock frequency) "f1" of the output signal from the clock supply 104 and the frequency (clock frequency) "f2" of the output signal from the clock supply 202 do not have strict constant values at all times, but suffer a slip at certain intervals depending on the actual frequencies. By appropriately selecting the frequency of slips, the values of the frequencies f1, f2, and the numerical relationship between m, n, the transmission data is prevented from being destroyed due to slips between the different clock signals.

Specifically, in the data transmission system 1D in which the first transmitter 100 has the clock supply 104 to output CLK1 and transmits data in synchronism with CLK1, and also delivers CLK1 as the phase reference signal to the second transmitter 200, the phase shift compensator 2 may correct the phase by a large quantity as compared with, or a quantity equal to or greater than, an average slip between CLK1 and CLK2.

Specifically, assuming that "n - m = k" (k represents the number of clock pulses decimated during one period on a synchronized state) and "f1 : f2 = 1 : n", then the phase can be corrected if one corrective quantity, i.e., a maximum corrective quantity "k/f2" per "n/f2" period, satisfy the following expression with respect to the average slip "n·|(1/f1) - (n/f2)|" (there is no limitation on a long-term corrective quantity):

$$n\left|\frac{1}{f1} - \frac{n}{f2}\right| \leq \frac{k}{f2}$$

The values of k, f2, n, etc. need to be designed in view of not only the circuit of the data transmission system, but also the relation thereof to other circuit sections. For example, it should be taken into account that a circuit section using the clock supply 202 for supplying CLK2 as a common clock source tends to suffer increased power consumption as the frequency f2 is higher.

The data transmission systems described above can be implemented by much simpler circuits than conventional arrangements. For example, in the data transmission system 1 shown in FIG. 1, the minimum components of the first transmitter 100 are the data transmission D flip-flop and the clock relay 102 for supply the clock signal thereto, and the minimum components of the second transmitter 200 are the data reception D flip-flop, the clock supply 202 and the divide-by-n frequency divider 203 for supplying the clock signal as a basis for the transmission clock signal, the clock edge deleter 205, the counter 206, and the phase comparator 207.

The data transmission systems according to embodiments of the present invention, which may be used instead of conventional data transmission systems which include a PLL circuit, a large-scale memory, and a control circuit, offer various advantages as described below.

Circuit scale and performance:

While the conventional data transmission system suffers an increased circuit scale, the data transmission system according to an embodiment of the present invention is capable of performing functions equivalent to those of the conventional data transmission system without the need for any high-speed analog circuits, high-speed circuits, complex control circuits, and large-scale memories. The data transmission system according to an embodiment of the present invention has a very high performance capability and can start up from a high-speed restart unlike conventional PLL circuits. For example, PLL circuits need a locking time in the order of several hundred μs. The fully digital circuit arrangement according to an embodiment of the present invention has a much quicker locking ability as it requires several clock pulses of CLK2 (having a frequency of several tens megahertz), which determines a data transmission rate when frequency-divided by n, until it is locked. For example, if the frequency of CLK2 is 100 MHz, m = 32, and n = 33, then the locking time is about 2.6 μs in worse cases.

Circuit design:

For transmitting data using a clock source which causes a frequency slip in one LSI circuit or a plurality of LSI circuits, it is not practical to use a number of PLL circuits. This is because the PLL approach requires an analog circuit and takes up a large space in an LSI circuit. Though the DPA referred to above has been proposed as one solution, the data transmission system according to an embodiment of the present invention can be further reduced in circuit scale and find a wider range of applications. For example, if the transmitters 100, 200 shown in FIG. 1 are internal circuits within one LSI circuit and have different power supply voltages, respectively, it is known that their delay times are different from each other by several tens ns (nanoseconds) due to voltage and manufacturing process variations though they are fabricated by the same manufacturing process. Since the data transmission system according to an embodiment of the present invention has a small circuit scale, it is suitable for correcting such a delay time difference because the LSI circuit contains many sections that require similar corrections and need to be controlled independently. The DPA as used in such corrective applications has to be of a larger scale than the data transmission system according to an embodiment of the present invention, and is disadvantageous as to the LSI cost. The large-scale DPA is also in effective to reduce power consumption.

In addition to the different power supply voltages in the circuit sections, delay times of signals that are exchanged between different blocks in the LSI circuit tend to vary greatly depending on the floor layout in the LSI circuit. It is therefore necessary to determine a final circuit arrangement and layout based on the results of a strict simulation on the phase of those signals. Since the data transmission system according to an embodiment of the present invention, rather than the conventional data transmission system, is reduced in circuit scale and simplified in arrangement, it is applicable to an actual installation for reducing the time required for the simulation. The reduction in the time required for the simulation directly results in a reduction in the period of time and cost for developing LSI circuits, and hence a reduction in the price of the data transmission system.

Environmental factors such as operating temperature:

The data transmission system according to an embodiment of the present invention observes the phase relationship between signals in actual operation thereof and controls the phase of the signals based on the observed result, and is thus effective to cope with environmental changes.

Generally, it is known that delay times in an LSI circuit vary greatly depending on the ambient temperature. An LSI circuit incorporating the data transmission system of an embodiment of the present invention is advantageous over the conventional data transmission system with respect to the guarantee of a range of operating temperatures. The data transmission system of an embodiment of the present invention is capable of making phase corrections depending on the actual operating conditions. For obtaining the timing for normal operation, it has heretofore been necessary to guarantee the operation of the data transmission system by fixing operating conditions such a frequency, an operating voltage, etc. According to an embodiment of the present invention, it is possible to expand an operation guarantee range. As a result, it is possible for the data transmission system of an embodiment of the present invention to operate with a sufficient clock frequency and voltage that are required, and, if a higher performance capability is required, to be optimized for operation with a maximum clock frequency and voltage. The data transmission system of embodiments of the present invention can meet both a power saver requirement for reduced circuit heating and extended operation time of battery-powered components and a desired performance requirement.

The data transmission system according to embodiments of the present invention can be used in a wide range of applications. For example, it may be applied to the transmission of data between circuit sections operating under different power supply voltages in an LSI circuit for the purpose of eliminating an effect produced when delay times vary depending on the control of the power supply voltages, or the transmission and reception of data between independent transmission units accurately without being affected by environmental factors.

The principles of the present invention are applicable to various data transmission systems. The second transmitter 200 may include an independent device or apparatus. The present invention is not limited to the above data transmission system where data and a clock signal are separated from each other, but may be applied to a data transmission system wherein the first transmitter 100 has a combiner for combining the data from the holder 101 and the clock signal from the clock relay 102, and the second transmitter 200 has a separator for separating the data and the clock signal that are sent from the combiner from each other, the separated data being delivered to the holder 201 and the separated clock signal used as the phase reference signal.

Although certain preferred embodiments of the present invention have been shown and described in detail, it should be understood that various changes and modifications may be made therein without departing from the scope of the appended claims.

Various respective aspects and features of the invention are defined in the appended claims. Features from the dependent claims may be combined with features of the independent claims as appropriate and not merely as explicitly set out in the claims.

**Claims**

1.  A data transmission system comprising:

    a first transmitter for transmitting data in synchronism with a first clock signal; and
    a second transmitter for receiving data from said first transmitter in synchronism with an output signal from a counter based on a second clock signal having a frequency higher than said first clock signal;
    said second transmitter having a clock shift compensator for controlling the number of pulses of said second clock signal depending on the result of comparison in phase between a phase reference signal based on said first clock signal and the output signal from said counter, thereby to correct the phase of the output signal from said counter to keep said output signal from said counter and said phase reference signal in phase with each other.

2.  The data transmission system according to claim 1, wherein said clock shift compensator comprises:

    a phase comparator for comparing said phase reference signal and said output signal from said counter in phase; and
    a clock edge deleter for limiting the number of pulses of said second clock signal depending on an output signal from said phase comparator and delivering the second clock signal with the limited number of pulses to said counter.

3.  The data transmission system according to claim 1, wherein said second transmitter comprises:

    a clock supply for outputting said second clock signal;

    wherein a frequency-divided signal of said second clock signal is sent to said first transmitter, and the frequency-divided signal is relayed in said first transmitter so as to be used as said first clock signal and also delivered as said phase reference signal to said second transmitter.

4.  The data transmission system according to claim 1, wherein said first clock signal and said second clock signal have a frequency ratio of 1 : n, and said counter comprises a modulo-m counter where m is less than n.

5.  The data transmission system according to claim 3, wherein said second transmitter has a divide-by-n frequency divider for frequency-dividing said second clock signal by n, and said counter comprises a modulo-m counter where m is less than n.

6.  The data transmission system according to claim 1, wherein said second transmitter has a transmission unit for transmitting data in synchronism with the output signal from said counter, and said first transmitter has a reception unit for receiving data transmitted from said first transmitter in synchronism with said first clock signal.

7.  The data transmission system according to claim 1, wherein said second transmitter has a converter for converting parallel data into serial data and a plurality of holders for temporarily holding reception data, the arrangement being such that the reception data is selectively supplied to said holders and an output signal from the holder other than the holder which is supplied with the reception data is supplied to said converter.

8. The data transmission system according to claim 1, wherein said first transmitter has a first clock supply for outputting said first clock signal, and said second transmitter has a second clock supply for outputting said second clock signal.

9. The data transmission system according to claim 8, wherein said clock shift compensator corrects the phase of the output signal from said counter by a corrective quantity based on one phase comparison process, which is equal to or greater than an average slip between said first clock signal and said second clock signal.

10. A data transmission apparatus for receiving data transmitted in synchronism with a first clock signal, in synchronism with an output signal from a counter based on a second clock signal having a frequency higher than said first clock signal, comprising:

a clock shift compensator for receiving a phase reference signal based on said first clock signal and controlling the number of pulses of said second clock signal depending on the result of comparison in phase between said phase reference signal and the output signal from said counter, thereby to correct the phase of the output signal from said counter to keep said output signal from said counter and said phase reference signal in phase with each other.

11. The data transmission apparatus according to claim 10, wherein said clock shift compensator comprises:

a phase comparator for comparing said phase reference signal and said output signal from said counter in phase; and
a clock edge deleter for limiting the number of pulses of said second clock signal depending on an output signal from said phase comparator and delivering the second clock signal with the limited number of pulses to said counter.

12. The data transmission apparatus according to claim 10, further comprising:

a clock supply for outputting said second clock signal;

wherein a frequency-divided signal of said second clock signal is sent to another data transmission apparatus for use as said first clock signal.

13. The data transmission apparatus according to claim 10, wherein said first clock signal and said second clock signal have a frequency ratio of 1 : n, and said counter comprises a modulo-m counter where m is less than n.

14. The data transmission apparatus according to claim 12, further comprising:

a divide-by-n frequency divider for frequency-dividing said second clock signal by n, and said counter comprises a modulo-m counter where m is less than n.

15. The data transmission apparatus according to claim 10, further comprising:

a transmission unit for transmitting data in synchronism with the output signal from said counter.

16. The data transmission apparatus according to claim 10, further comprising:

a converter for converting parallel data into serial data and a plurality of holders for temporarily holding reception data, the arrangement being such that the reception data is selectively supplied to said holders and an output signal from the holder other than the holder which is supplied with the reception data is supplied to said converter.

17. The data transmission apparatus according to claim 10, wherein said clock shift compensator corrects the phase of the output signal from said counter by a corrective quantity based on one phase comparison process, which is equal to or greater than an average slip between said first clock signal and said second clock signal.

# F I G. 1

EP 1 526 675 A2

# F I G. 2

CASE 1)

MODULO-m COUNTER OUTPUT

METASTABILITY AVOIDER OUTOUT

⟹ ONE EDGE DELETED

CASE 2)

MODULO-m COUNTER OUTPUT

METASTABILITY AVOIDER OUTOUT

⟹ TWO EDGE DELETED

CASE 3)

MODULO-m COUNTER OUTPUT

METASTABILITY AVOIDER OUTOUT

⟹ NO EDGE DELETED

EP 1 526 675 A2

# F I G. 3

n=4/m=3
IN PHASE
(ONE EDGE DELETED)

CLOCK (CLK2)

DIVIDED-BY-n CLOCK

MODULO-m COUNTER OUTPUT

PHASE COMPARATOR OUTPUT

IN PHASE

CLOCK EDGE DELETER OUTPUT

DELETED

# F I G. 4

n=4/m=3
DIVIDED-BY-n
CLOCK LAGGING
(TWO EDGES DELETED)

CLOCK (CLK2)

DIVIDED-BY-n
CLOCK

MODULO-m
COUNTER OUTPUT

PHASE
COMPARATOR
OUTPUT

IN PHASE    LAGGING    IN PHASE

CLOCK EDGE
DELETER OUTPUT

DELETED

EP 1 526 675 A2

# F I G. 5

n=4/m=3
DIVIDED-BY-n
CLOCK LEADING
(NO EDGE DELETED)

CLOCK (CLK2)

DIVIDED-BY-n
CLOCK

MODULO-m
COUNTER OUTPUT

PHASE
COMPARATOR
OUTPUT

IN PHASE    LEADING    IN PHASE

CLOCK EDGE
DELETER OUTPUT

NOT DELETED

EP 1 526 675 A2

# F I G. 6

# F I G. 7

EP 1 526 675 A2

# FIG. 8

EP 1 526 675 A2

EP 1 526 675 A2

# F I G. 9